## Europäisches Patentamt

## European Patent Office

## Office européen des brevets

(11) Veröffentlichungsnummer: **0 275 903**
**B1**

(12) **EUROPÄISCHE PATENTSCHRIFT**

(45) Veröffentlichungstag der Patentschrift:
26.09.90

(51) Int. Cl.⁵: **B60J 3/02**

(21) Anmeldenummer: **88100352.9**

(22) Anmeldetag: **13.01.88**

(54) Sonnenblende für Fahrzeuge.

(30) Priorität: **22.01.87 DE 3701760**

(43) Veröffentlichungstag der Anmeldung:
**27.07.88 Patentblatt 88/30**

(45) Bekanntmachung des Hinweises auf die Patenterteilung:
**26.09.90 Patentblatt 90/39**

(84) Benannte Vertragsstaaten:
**DE ES FR GB IT SE**

(56) Entgegenhaltungen:
**EP-A- 0 076 174**
**DE-B- 2 117 175**
**FR-A- 2 491 402**

(73) Patentinhaber: **Gebr. Happich GmbH,
Postfach 10 02 49 Clausenbrücke 1,
D-5600 Wuppertal 1(DE)**

(72) Erfinder: **Viertel, Lothar, Jutta v. Hattsteinstrasse 41,
D-6636 Berus Überherrn(DE)**
Erfinder: **Cholley, Bernard, Gambetta, F-70800 Conflans/
Lauterre(FR)**

ACTORUM AG

## Beschreibung

Die Erfindung bezieht sich auf eine Sonnenblende für Fahrzeuge mit einem an einem Endbereich ihres oberen Längsrandes angeordneten, aus Gehäuse und Sonnenblendenachse bestehenden Schwenklager und einer am anderen Endbereich desselben Längsrandes eine Ausnehmung desselben querenden Gegenlagerachse, die lösbar mit einem Gegenlagergehäuse verbunden ist, wobei die Sonnenblende aus zwei fest miteinander verbundenen Halbschalen gebildet und mit Bezugsmaterial verkleidet ist.

Eine Sonnenblende der gattungsgemäßen Art ist in der EP-A- 0 076 174 beschrieben. Bei dieser bekannten Sonnenblende, die aus zwei hohlen, miteinander verbundenen Halbschalen besteht, ist vorgesehen, daß eine der Halbschalen aus gespritztem Kunststoff und die andere Halbschale aus Kunststoffschaum gebildet ist. Dabei ist die aus gespritztem Kunststoff bestehende Halbschale einstückig und materialeinheitlich mit einer Gegenlagerachse ausgebildet. Die beiden miteinander verbundenen Halbschalen sind mit einem Bezugsmaterial umfangsseitig verkleidet. Die Verkleidung erfolgt in der Weise, daß die Sonnenblende beidseitig jeweils mit einer Folie oder dergleichen belegt und die beiden Folien dann entlang des Randes der Sonnenblende, deren Kontur folgend, miteinander verschweißt werden. Hinsichtlich der Gegenlagerachse besteht nun die Möglichkeit, diese mit in die folienartige Hülle einzubeziehen, daß heißt auch die Gegenlagerachse mit der Folie zu umkleiden, wie es auch in der Praxis verwirklicht wird. Im Gebrauch der Sonnenblende führt dies aber dazu, daß die Hülle im eingerasteten Zustand der Gegenlagerachse zwischen dieser und dem Gegenlagergehäuse zu liegen kommt und beim Hoch- oder Herabklappen der Sonnenblende dort leicht verzogen und eingerissen werden kann.

Eine zweite Möglichkeit hinsichtlich der Gegenlagerachse besteht darin, diese nun nicht in die folienartige Hülle mit einzubeziehen sondern unverkleidet zu belassen. Die Realisierung dieser Möglichkeit wirft aber das Problem einer farblichen Anpassung der Gegenlagerachse an die jeweilige Farbe des Umhüllungsmaterials auf. Wie nämlich die Erfahrung gezeigt hat, lehnt die Käuferschaft, offenbar aus den ästhetischen Anforderungen nicht entsprechenden Gründen solche Sonnenblenden ab, bei denen zwischen dem Bezugsmaterial und der Gegenlagerachse ein ins Auge fallender farblicher Unterschied besteht, wie auch solche Sonnenblenden abgelehnt werden, deren farbliche Gestaltung nicht der jeweiligen farblichen Gestaltung der Fahrzeuginnenausstattung entspricht. Es ist nun theoretisch möglich, die Halbschalen der Sonnenblende aus einem der Farbe des jeweiligen Bezugmaterials entsprechend eingefärbten Kunststoffmaterials im z.B. Spritzgußverfahren zu erstellen und das Problem auf diese Weise zu lösen. Wenn man aber bedenkt, daß Sonnenblenden für ein und demselben Fahrzeugtyp in bis zu zehn unterschiedlichen Farben hergestellt werden, so ist es einleuchtend, daß diese Möglichkeit aus praktischen Erwägungen heraus nicht realisierbar ist; denn neben den erheblichen Kosten für die unterschiedlichen Einfärbungen des Kunststoffmaterials dürften sich insbesondere auch Probleme in bezug auf die Lagerhaltung ergeben, weil zu den unterschiedlichen Farbgebungen der Sonnenblenden noch erschwerend hinzukommt, daß von der Käuferschaft Sonnenblenden ohne Spiegel, mit Spiegel sowie mit Spiegel und Spiegelbeleuchtung in der jeweils passenden Farbe verlangt werden. Wenn man noch zusätzlich bedenkt, daß die Sonnenblenden im allgemeinen in Links- und Rechtsausführung gefertigt werden, so wird klar, welche Lagerkapazität für die Halbschalen der Sonnenblende bereitgestellt werden müßte, um die weiter oben aufgezeigte Möglichkeit zu verwirklichen.

Der Erfindung liegt nun die Aufgabe zugrunde, eine Sonnenblende der eingangs genannten Art so auszubilden, daß die Gegenlagerachse, ohne daß sie einer leicht beschädigbaren Verkleidung mit Bezugsmaterial bedarf, in besonders einfacher und kostengünstiger Weise der jeweiligen Farbe des Sonnenblendenbezugmaterials anpaßbar ist und die Sonnenblende insgesamt in der Herstellung zu vereinfachen und zu verbilligen.

Diese Aufgabe wird der Erfindung zufolge dadurch gelöst, daß die Halbschalen an den einander zugewandten Seiten mit Lageröffnungen zur Aufnahme der als separates Bauteil gefertigten Gegenlagerachse ausgebildet sind und daß die Gegenlagerachse zwischen den Halbschalen gegen Verdrehen und axiales Verschieben gesichert, eingeklemmt ist.

Die erfindungsgemäßen Maßnahmen bieten verschiedene wesentliche Vorteile. So kann für die Herstellung der Halbschalen jedes eingefärbte oder nicht eingefärbte Material, sofern es den technischen Anforderungen z.B. in bezug auf Bruchfestigkeit, Wärmestandfähigkeit und dergleichen genügt, eingesetzt werden, weil die Halbschalen, nachdem sie miteinander verbunden und mit Bezugsmaterial verkleidet worden sind, den Blicken eines Betrachters vollkommen entzogen sind. Damit ergibt sich für die Herstellung der Halbschalen eine relativ große Freiheit hinsichtlich der Materialauswahl und eine überschaubare Lagerhaltung, da sich diese auf Links- und Rechts- und auf mit oder ohne Spiegel-Ausführungen beschränkt. Für die farbliche Anpassung der Gegenlagerachse an die jeweilige Farbe des Bezugsmaterials ist es somit lediglich erforderlich, aus entsprechend eingefärbtem Material gefertigte Gegenlagerachsen bereitzustellen. Da die Gegenlagerachsen im Vergleich zur Baugröße der Halbschalen als äußerst kleine Bauteile anzusehen sind, ergeben sich hinsichtlich der Lagerhaltung keine Probleme. Auch die Kosten der Einfärbung sind im Hinblick auf die geringe Baugröße einer Gegenlagerachse und des entsprechend geringen Materialbedarfs nicht wesentlich. Die Maßnahme, die Gegenlagerachse zwischen den Halbschalen der Sonnenblende gegen Verdrehen und axiales Verschieben gesichert einzuklemen, ist äußerst montagefreundlich und gibt auch dem Benutzer der Sonnenblende das Gefühl, als würde diese aus einem Guß bestehen.

Eine besonders einfache Möglichkeit, um ein Verdrehen der Gegenlagerachse auszuschließen, ergibt sich dann, wenn in Ausgestaltung der Erfindung vorgesehen wird, daß zumindest ein Endbereich der Gegenlagerachse unrund, z.B. als Vierkant ausgeführt ist und daß die zur Aufnahme des oder der unrunden Endbereiche der Gegenlagerachse bestimmten Lageröffnungen der Halbschalen eine entsprechend unrunde Ausbildung aufweisen.

Zur axialen Festlegung der Gegenlagerachse kann in Weiterbildung der Erfindung vorgesehen sein, daß die einandergegenüberliegenden Lageröffnungen jeder Halbschale jeweils eine ihre axiale Erstreckung begrenzende Wand aufweisen, wobei der Abstand von Wand zu Wand der Länge der Gegenlagerachse entspricht.

Gemäß einer weiteren Ausgestaltung der Erfindung kann vorgesehen sein, daß die Gegenlagerachse mit zumindest einem elektrischen Kontaktelement ausgerüstet ist, das die Gegenlagerachse im etwa mittigen Bereich radial überragt und daß in der Gegenlagerachse zumindest ein elektrischer Leiter eingelagert ist, von dem ein Ende an dem Kontaktelement und das andere, aus einem Gegenlagerachsenende heraustretende, an einer an der Sonnenblende angeordneten elektrischen Lichtquelle angeschlossen ist. Damit läßt sich die Erfindung mit Vorteil auch bei mit einer elektrischen Lichtquelle ausgerüsteten Sonnenblende verwirklichen.

Hinsichtlich der angestrebten einfachen und kostensparenden Herstellung der Sonnenblende ist es vorteilhaft, wenn die Halbschalen und die Gegenlagerachse als Kunststoff-Spritzgußteile ausgeführt sind. Eine weitere zweckmäßige, die Herstellung der Sonnenblende vereinfachende und verbilligende Maßnahme kann in Weiterbildung der Erfindung darin bestehen, daß die Halbschalen an den einanderzugewandten Seiten mit jeweils einer zusätzlichen Lageröffnung zur Aufnahme einer Feder, die U-förmig gestaltet und mit den einanderzugewandten Seiten ihrer Schenkel klemmend an der Sonnenblendenachse zur Anlage kommt, ausgebildet sind. Damit kann die Anordnung der Feder, durch die die Sonnenblende in auswählbaren Klapplagen gehalten wird, ebenso durch eine einfache Steckmontage erfolgen, wie die der Gegenlagerachse.

Für eine Sonnenblende mit Beleuchtungseinrichtung ist es von Vorteil, wenn die Feder mit einem an der Sonnenblendenachse zur Anlage kommenden Kontaktarm sowie mit einem von einem Kabelschuh aufgenommenen Steckkontakt einstückig ausgebildet ist, wobei der Kabelschuh mit dem ersten Ende eines elektrischen Leiters verbunden ist, dessen zweites Ende an einer an der Sonnenblende angeordneten elektrischen Lichtquelle angeschlossen ist.

Ausführungsbeispiele der Erfindung werden nachfolgend anhand der Zeichnung näher erläutert. Es zeigen:

Fig. 1a eine untere Halbschale
Fig. 1b eine erste obere Halbschale
Fig. 1c eine zweite obere Halbschale
Fig. 1d eine Sonnenblendenachse mit Lagerböckchen

Fig. 1e ein Gegenlagergehäuse
Fig. 1f eine Gegenlagerachse
Fig. 1g ein mit der Halbschale nach Fig. 1c verbindbarer Rahmen mit Spiegel,
Fig. 1h eine zwischen zwei Halbschalen einklemmbare Feder,
Fig. 2a eine untere, für eine beleuchtete Sonnenblendenausführung mit Spiegel bestimmte Halbschale
Fig. 2b eine obere, für eine beleuchtete Sonnenblendenausführung mit Spiegel bestimmte Halbschale,
Fig. 2c eine zwischen den Halbschalen nach Fig. 2a und 2b einklemmbare Gegenlagerachse,
Fig. 2d eine zwischen den Halbschalen einklemmbare Feder,
Fig. 2e eine mit Beleuchtungselementen ausgerüstete und mit der Halbschale nach Fig. 2b verbindbare Wanne und
Fig. 2f ein mit der Wanne nach Fig. 2e verbindbarer Rahmen mit Spiegel.

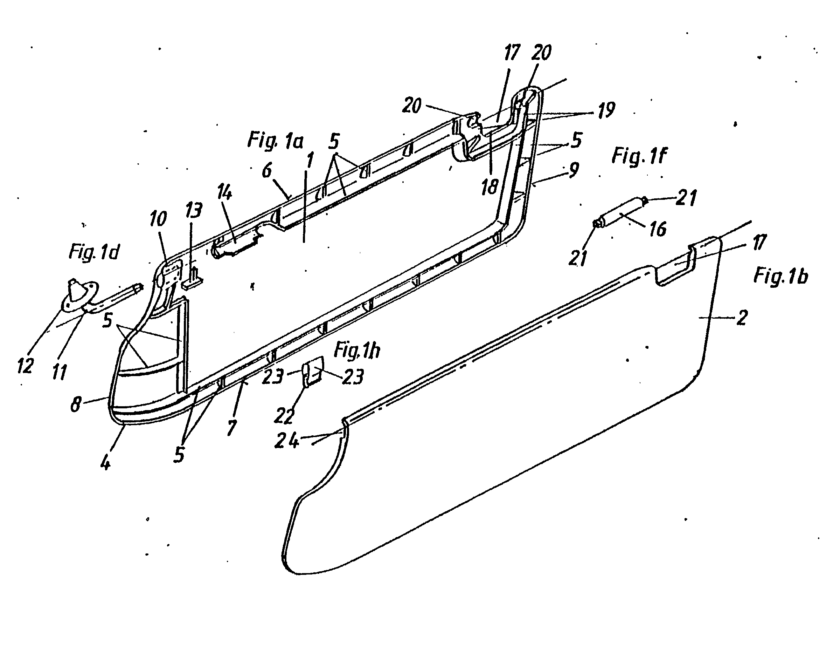

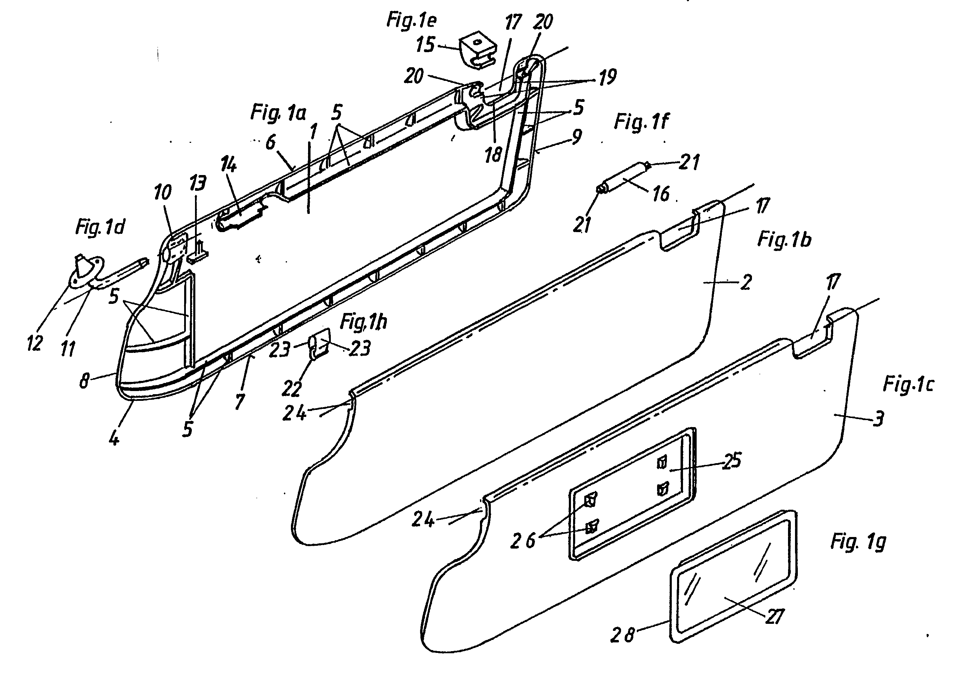

Fig. 1a zeigt eine erste untere Halbschale 1, die in Verbindung mit der ersten oberen Halbschale 2 nach Fig. 1b oder in Verbindung mit der zweiten oberen Halbschale 3 nach Fig. 1c eine Fahrzeugsonnenblende ergibt, wobei allerdings zur Vervollständigung der Sonnenblende noch die in den Fig. 1d bis 1h gezeigten Einzelheiten und eine nicht dargestellte Verkleidung mit Bezugsmaterial gehören. Unter der unteren Halbschale 1 soll diejenige verstanden werden, die in der Nichtgebrauchslage der in einem Fahrzeug eingebauten Sonnenblende vom Dachhimmel abgewandt ist.

Die Halbschale 1 weist einen umlaufenden Kragen 4 und diesem benachbarte Verstärkungsrippen 5 auf. Die Halbschale 1 besitzt eine obere Längskante 6, eine untere Längskante 7 sowie Stirnkanten 8 und 9. Im Bereich der oberen Längskante 6 weist die Halbschale 1, und zwar zeichnungslinksseitig, ein Lagergehäuse 10 auf, in dem ein Schenkel einer L-förmigen Sonnenblendenachse 11 gelagert ist, dessen anderer Schenkel in einem an einer Fahrzeugkarosserie zu befestigenden Lagerböckchen 12 sitzt. Zum Lagergehäuse 10 gehören noch Gehäuseteile 13 und 14, die durch entsprechende Gehäuseteile an den Gegenhalbschalen 2 und 3 vervollständigt werden. Ebenfalls im Bereich der oberen Längskante 6 ist ein sogenanntes Gegenlager angeordnet, welches aus einem an der Fahrzeugkarosserie zu befestigenden Gegenlagergehäuse 15 (Fig. 1e) und einer in dessen Lageraufnahme lösbar einrastbaren Gegenlagerachse 16 (Fig. 1f) besteht. Die Anordnung der Gegenlagerachse ist so getroffen, daß sie mit dem im Lagergehäuse 10 (13, 14) befindlichen Schenkel der Sonnenblendenachse 11 fluchtet und mit dieser eine gemeinsame Drehachse bildet.

Die Gegenlagerachse 16 überquert eine gegenüber dem oberen Längsrand 6 zurückspringende Ausnehmung 17 der Halbschale 1, wobei die Ausnehmung 17 eine parallel zum Längsrand 6 verlaufende Bodenwandung 18 und zwei etwa senkrecht zu dieser verlaufende Seitenwandungen 19 aufweist. Die Seitenwandungen weisen jeweils eine Unterbrechung auf, an die sich jeweils eine Lageröffnung 20 für die Endbereiche der Gegenlagerachse 16 anschließt. Die Lageröffnungen 20 sind den als Vierkant 21 ausgebildeten Endbereichen der Gegenlagerachse 16 angepaßt, so daß eine verdrehfeste Lagerung für die Gegenlagerachse gegeben ist. Zudem sind die Aufnahmen bzw. Lageröffnungen 20 so ausgebildet, daß eine axiale Verschiebung der Gegenlagerachse nicht möglich ist. Die Lageröffnungen sind erst vollständig, wenn die Halbschalen 1 und 2 oder 1 und 3 miteinander verbunden sind.

Das Gehäuseteil 13 ist so gestaltet, daß es eine Aufnahme für die in Fig. 1h gezeigte Feder 22 bildet. Die Feder ist etwa U-förmig ausgebildet und weist zwei die Sonnenblendenachse 11 in der Einbauposition klemmende Schenkel 23 auf. Im übrigen handelt es sich bei der Feder 22 um ein zum Stand der Technik gehörendes Bauteil, das nicht näher beschrieben werden muß.

Die Halbschale 2 entspricht der nach Fig. 1a nahezu spiegelbildlich. Ein Unterschied besteht lediglich darin, daß die Halbschale 2 anstelle des Lagergehäuses 10 eine Aussparung 24 aufweist, in die das Lagergehäuse 10 passend eingreift.

Beim Zusammenbau der Sonnenblende wird so verfahren, daß in die Aufnahmen bzw. Lageröffnungen 20 der Halbschale 1 (oder 2) eine die jeweils gewünschte Farbe aufweisende Gegenlagerachse 16 und in die durch das Gehäuseteil 13 gebildete Aufnahme die Feder 22 eingesteckt wird und daß sodann die Halbschale 2 auf die Halbschale 1 aufgesetzt und die Halbschalen z.B. durch Ultraschallschweißung miteinander verbunden werden. Wegen der praktisch spiegelbildlichen Ausbildung der Halbschalen 1 und 2 (3) liegen die an beiden Halbschalen vorgesehenen Kragen 4 und Verstärkungsrippen 5 plan aneinander, so daß beim Ultraschallschweißen Stoß an stoß Schweißnähte gebildet werden. Es ist natürlich auch möglich die Halbschalen 1 und 2 miteinander zu verkleben oder mittels anzuformender Klipselemente aneinander festzulegen.

Mit Ausnahme der Feder 22 und ggf. auch der Sonnenblendenachse 11 sind die beschriebenen Sonnenblendenstandteile als Kunststoff-Spritzgußteile ausgebildet. Das noch für die Verkleidung der Sonnenblende vorzusehende Bezugsmaterial kann z.B. aus einer Kunststofffolie bestehen.

Die Halbschale nach Fig. 1c weist gegenüber der nach Fig. 1b den Unterschied auf, daß sie mit einem Spiegel ausrüstbar ist, wozu sie eine in eine Öffnung eingesetzte Wanne 25 aufweist, die mit Klipsaufnahmen 26 versehen ist.

In Fig. 1g ist ein Spiegel 27 gezeigt, der von einem Rahmen 28 gehalten wird. Der Rahmen 28 ist auf seiner Rückseite mit nicht gezeigten Klipselementen versehen, die in die Klipsaufnahmen 26 der Wanne 25 einsteckbar sind.

Die Halbschalen 2 und 3 sind erkenntlicherweise wahlweise verwendbar.

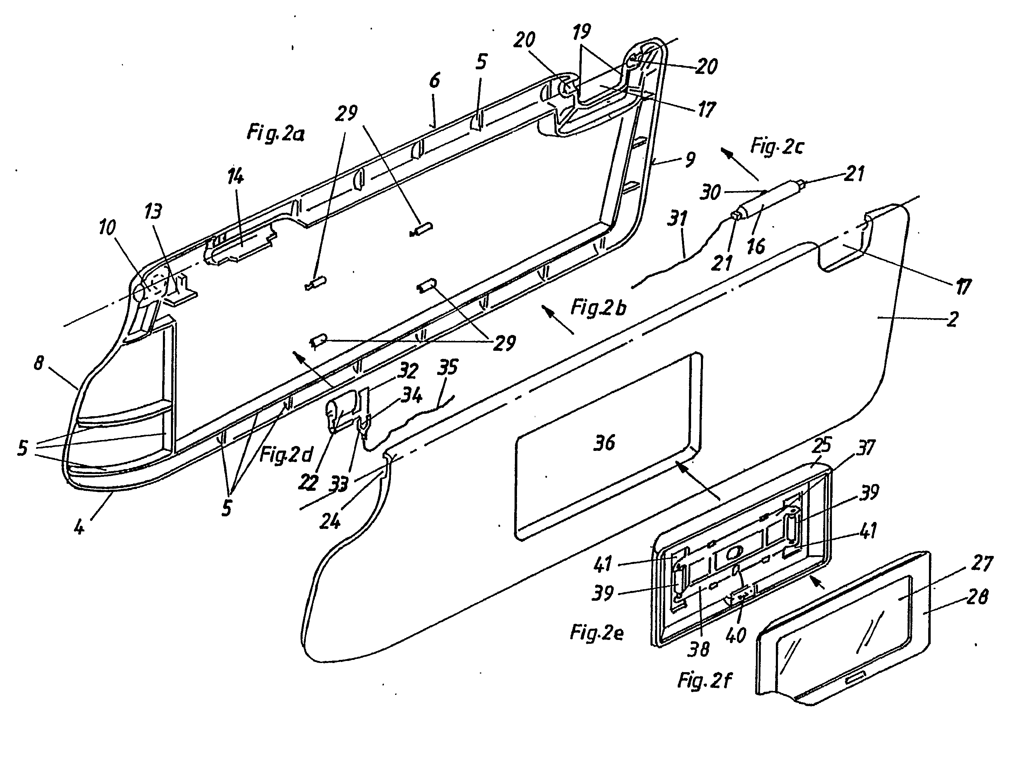

Die in Fig. 2a gezeigte untere Halbschale entspricht in ihrem grundsätzlichen Aufbau der nach Fig. 1a, so daß diese mit denselben Bezugsziffern versehen ist. Die Halbschale 1 nach Fig. 2a besitzt lediglich zusätzlich angeformte Klipselemente 29, die zur Halterung der in Fig. 2e gezeigten Wanne 25 dienen.

Die Gegenlagerachse 16 nach Fig. 2c ist mit einem in ihrem mittigen Bereich radial überstehenden elektrischen Kontaktelement 30 versehen, das mit einem in Gegenlagergehäuse 15 anordbaren Gegenkontakt (nicht gezeigt) kontaktiert. In der Gegenlagerachse 16 ist weiterhin ein elektrischer Leiter 31 eingelagert, von dem ein Ende in nicht näher dargestellter Weise an dem Kontaktelement und das andere, aus einem Gegenlagerachsende heraustretende, an einer an der Sonnenblende angeordneten, in Fig. 2e gezeigten Lichtquelle angeschlossen ist.

Die in Fig. 2d gezeigt Feder 22 unterscheidet sich von der nach Fig. 1h dadurch, daß sie zusätzlich mit einem an der Sonnenblendenachse 11 zur Anlage kommenden Kontaktarm 32 sowie mit einem von einem Kabelschuh 33 aufgenommenen Steckkontakt 34 einstückig ausgebildet ist. Der Kabelschuh 33 ist mit dem ersten Ende eines elektrischen Leiters 35 verbunden, dessen anderes Ende an der elektrischen Lichtquelle angeschlossen ist.

Die Halbschale 2 nach Fig. 2b entspricht der nach Fig. 1b und läßt im mittleren Bereich ihrer Hauptfläche eine Öffnung 36 für die Wanne 25nach Fig. 2e erkennen.

Die Wanne 25 zeigt Stromschienen 37 und 38, zwischen denen Soffittenlampen 39 als Lichtquellen angeordnet sind. An den Stromschienen 37, 38 sind die elektrischen Leiter 31, bei dem es sich um einen Stromzuführungsleiter handeln kann und 35, bei dem es sich um einen Masseleiter handeln kann, in nicht näher gezeigter Weise angeschlossen. In der Wanne 25 ist schließlich noch ein Ausschalter oder Helligkeitsregler 40 installiert. Die Wanne 25 weist noch Öffnungen 41 zum Übergreifen der Klipselemente 29 (Fig. 2a) auf, die hinter den Öffnungsrändern einrasten und die Wanne 25 an der Sonnenblende festlegen.

Die Wanne 25 wird von dem in Fig. 2f gezeigten Spiegel 27 und dem diesen halternden Rahmen 28 abgedeckt, wobei zwischen der Wanne 25 und dem Rahmen 28 nicht näher dargestellte Befestigungselemente, wie Klipse oder dergleichen, zur Halterung vorgesehen sind. Der Rahmen 28 nach Fig. 2f ist aus einem lichtdurchlässigen Material gebildet.

**Patentansprüche**

1. Sonnenblende für Fahrzeuge mit einem an einem Endbereich ihres oberen Längsrandes (6) angeordneten, aus Gehäuse (10, 13, 14) und Sonnenblendenachse (11) bestehenden Schwenklager und einer am anderen Endbereich desselben Längsrandes (6) eine Ausnehmung (17) desselben querenden Gegenlagerachse (16), die lösbar mit einem Gegenlagergehäuse (15) verbunden ist, wobei die Sonnenblende aus zwei fest. miteinander verbundenen Halbschalen (1, 2, 3) gebildet und mit Bezugsmaterial verkleidet ist, dadurch gekennzeichnet, daß die Halbschalen (1, 2, 3) an den einanderzugewandten Seiten mit Lageröffnungen (20) zur Aufnahme der als separates Bauteil gefertigten Gegenlagerachse (16) ausgebildet sind und daß die Gegenlagerachse (16) zwischen den Halbschalen (1, 2, 3) gegen Verdrehen und axiales Verschieben gesichert, eingeklemmt ist.

2. Sonnenblende nach Anspruch 1, dadurch gekennzeichnet, daß zumindest ein Endbereich der Gegenlagerachse (16) unrund, z.B. als Vierkant (21) ausgeführt ist und daß die zur Aufnahme des oder der unrunden Endbereiche der Gegenlagerachse (16) bestimmten Lageröffnungen (20) der Halbschalen (1, 2, 3) eine entsprechend unrunde Ausbildung aufweisen.

3. Sonnenblende nach Anspruch 1 und 2, dadurch gekennzeichnet, daß die einandergegenüberliegenden Lageröffnungen (20) jeder Halbschale (1, 2, 3) jeweils eine ihre axiale Erstreckung begrenzende Wand aufweisen, wobei der Abstand von Wand zu Wand der Länge der Gegenlagerachse (16) entspricht.

4. Sonnenblende nach einem oder mehreren der Ansprüche 1 bis 3, dadurch gekennzeichnet, daß die Gegenlagerachse (16) mit zumindest einem elektrischen Kontaktelement (30) ausgerüstet ist, das die Gegenlagerachse (16) im etwa mittigen Bereich radial überragt und daß in der Gegenlagerachse (16) zumindest ein elektrischer Leiter (31) eingelagert ist, von dem ein Ende an dem Kontaktelement (30) und das andere, aus einem Gegenlagerachsenende heraustretende, an einer an der Sonnenblende angeordneten elektrischen Lichtquelle angeschlossen ist.

5. Sonnenblende nach einem oder mehreren der Ansprüche 1 bis 4, dadurch gekennzeichnet, daß die Gegenlagerachse (16) als Kunststoff-Spritzgußteil ausgeführt ist.

6. Sonnenblende nach einem oder mehreren der Ansprüche 1 bis 4, dadurch gekennzeichnet, daß die Halbschalen (1, 2, 3) und die Gegenlagerachse (16) als Kunststoff-Spritzgußteile ausgeführt sind.

7. Sonnenblende nach einem oder mehreren der Ansprüche 1 bis 6, dadurch gekennzeichnet, daß die Halbschalen (1, 2, 3) an den einanderzugewandten Seiten mit jeweils einer zusätzlichen Lageröffnung zur Aufnahme einer Feder (22), die U-förmig gestaltet und mit den einanderzugewandten Seiten ihrer Schenkel (23) klemmend an der Sonnenblendenachse (11) zur Anlage kommt, ausgebildet sind.

8. Sonnenblende nach Anspruch 7, dadurch gekennzeichnet, daß die Feder (16) mit einem an der Sonnenblendenachse (11) zur Anlage kommenden Kontaktarm (32) sowie mit einem von einem Kabelschuh (33) aufgenommenen Steckkontakt (34) einstückig ausgebildet ist, wobei der Kabelschuh (33) mit dem ersten Ende eines elektrischen Leiters (35) verbunden ist, dessen anderes Ende an einer an der Sonnenblende angeordneten elektrischen Lichtquelle angeschlossen ist.

**Claims**

1. A sun visor for vehicles, having a pivot bearing arranged at one end region of its upper longitudinal edge (6) and comprising a housing (10, 13, 14) and sun visor spindle (11), and having a counter-bearing spindle (16) crossing an aperture (17) of the same longitudinal edge (6) at the other end region of the said edge, which counterbearing spindle is detachably connected with a counterbearing housing (15), while the sun visor is formed from two half-shells (1, 2, 3) firmly connected with one another and clad with covering material, characterised in that the half-shells (1, 2, 3) are formed, on the sides facing one another, with bearing openings (20) for the reception of the counter-bearing spindle (16) which is made as a separate component, and in that the counter-bearing spindle (16) is clamped between the half-shells (1, 2, 3), being secured against twisting and axial displacement.

2. A sun visor according to Claim 1, characterised in that at least one end region of the counter-bearing spindle (16) is made non-circular, for example as a square (21), and in that the bearing openings (20) of the half-shells (1, 2, 3) intended for the reception of the non-circular end zone or zones of the counter-bearing spindle have a corresponding non-circular formation.

3. A sun visor according to Claims 1 and 2, characterised in that the mutually, opposite bearing openings (20) of each half-shell (1, 2, 3) eath comprise a wall defining their axial extent, while the distance from wall to wall corresponds to the length of the counter-bearing spindle (16).

4. A sun visor according to any one or more of Claims 1 to 3, characterised in that the counter-bearing spindle (16) is equipped with at least one electric contact element (30) which protrudes radially from the counter-bearing spindle (16) approximately in the middle region, and in that in the ounter-bearing spindle (16) there is incorporated at least one electric conductor (31), of which one end is connected to the contact element (30) and the other end, emerging from the counter-bearing spindle end, is connected to an electric light source arranged on the sun visor.

5. A sun visor according to any one or more of Claims 1 to 4, characterised in that the counter-bearing spindle (16) is made as a synthetic plastics material injection-moulding.

6. A sun visor according to any one or more of Claims 1 to 4, characterised in that the half-shells (1, 2, 3) and the counter-bearing spindle (16) are formed as synthetic plastics material injection-mouldings.

7. A sun visor according to any one or more of Claims 1 to 6, characterised in that the half-shells (1, 2, 3) are formed on the sides facing one another each with an additional bearing opening for the reception of a spring (22) which is of U-shaped configuration and comes to abut with the mutually facing sides of its legs (23) in a clamping manner on the sun visor axis (11).

8. A sun visor according to Claim 7, characterised in that the spring (16) is made in one piece with a contact arm (32) which comes to abut on the sun visor axis (11) and with a push-in contact (34) received by a cable shoe (33), where the cable shoe (33) is connected with the first end of an electric conductor (35), the other end of which is connected to an electric light source arranged on the sun visor.

## Revendications

1. Pare-soleil pour véhicules automobiles comprenant un palier de pivotement monté dans une région d'extrémité de son bord longitudinal supérieur (6) et constitué par un logement (10, 13, 14) et l'axe (11) du pare-soleil, et un autre contre-axe de support (16) traversant transversalement, à l'autre extrémité du même bord longitudinal (6), un évidement (17) de ce dernier, contre-axe qui est relié de façon amovible à un logement de contre-palier (15), le pare-soleil étant constitué par deux demi-coquilles fermement reliées l'une à l'autre et recouverte d'un matériau de garnissage, caractérisé en ce que les demi-coquilles (1, 2, 3) comprennent sur leurs côtés tournés l'un vers l'autre des ouvertures de palier (20) destinées à la réception du contre-axe de support (16) réalisé sous forme d'un élément séparé et en ce que le contre-axe de support (16) est serré et fixé entre les demi-coquilles (1, 2, 3) de manière à ne pas pouvoir tourner ni effectuer de mouvement axial.

2. Pare-soleil selon la revendication 1, caractérisé en ce qu'au moins une région d'extrémité du contre-axe de support (16) est en faux-rond, et par exemple sous forme d'un quatre-pans (21) et en ce que les ouvertures de palier (20) des demi-coquilles (1, 2, 3) destinées à la réception de la ou des régions d'extrémité à faux-rond du contre-axe de support (16) ont une constitution en faux-rond correspondante.

3. Pare-soleil selon les revendications 1 et 2, caractérisé en ce que les ouvertures de palier (20) de chaque demi-coquille (1, 2, 3) qui sont tournées l'une vers l'autre comprennent respectivement une paroi limitant leur dimension axiale, la distance de paroi à paroi correspondant à la longueur du contre-axe de support (16).

4. Pare-soleil selon une ou plusieurs des revendications 1 à 3, caractérisé en ce que le contre-axe de support (16) est équipé d'au moins d'un élément de contact électrique (30) qui fait saillie radialement sensiblement dans la région centrale du contre-axe de support (16) et en ce qu'un conducteur électrique (31) au moins est incorporé dans le contre-axe de support (16), dont une extrémité est raccordée à l'élément de contact (30) et l'autre extrémité qui sort par une extrémité du contre-axe de support est raccordée à une source de lumière électrique montée dans le pare-soleil.

5. Pare-soleil selon une ou plusieurs des revendications 1 à 4, caractérisé en ce que le contre-axe de support (16) est constitué sous forme d'un élément en matière synthétique moulé par injection.

6. Pare-soleil selon une ou plusieurs des revendications 1 à 4, caractérisé en ce que les demi-coquilles (1, 2, 3) et le contre-axe de support (16) sont constitués sous forme d'éléments en matière synthétiques moulés par injection.

7. Pare-soleil selon une ou plusieurs des revendications 1 à 6, caractérisé en ce que les demi-coquilles (1, 2, 3) comprennent respectivement sur leurs côtés tournés l'un vers l'autre une ouverture de palier additionnelle destinée à la réception d'un ressort (22) conformé en U qui vient en appui par serrage contre l'axe (11) du pare-soleil par les côtés tournés l'un vers l'autre de ses branches (23).

8. Pare-soleil selon la revendication 7, caractérisé en ce que le ressort (16) est constitué d'un seul tenant avec un bras de contact (32) venant en appui sur l'axe (11) du pare-soleil ainsi qu'avec un contact d'enfichage (34) reçu dans une cosse de câble (33), la cosse de câble (33) étant reliée à la première extrémité d'un conducteur électrique (35) dont l'autre extrémité est raccordée à une source de lumière électrique montée dans le pare-soleil.

Fig.1b
Fig.1f
Fig.1a
Fig.1d
Fig.1h

Fig.1e

Fig.1a

Fig.1d

Fig.1f

Fig.1b

Fig.1c

Fig.1h

Fig.1g

EP 0 275 903 B1

Fig.2a

Fig.2b

Fig.2c

Fig.2d

Fig.2e

Fig.2f

EP 0 275 903 B1